# EUROPÄISCHE PATENTSCHRIFT

(11) **EP 2 916 644 B1**
(45) Veröffentlichungstag und Bekanntmachung des Hinweises auf die Patenterteilung: **02.11.2016**
(21) Anmeldenummer: 13766061.9
(22) Anmeldetag: 23.09.2013
(51) Int. Cl.: A01C 7/20

(54) **SÄSCHAR**
SOWING SHARE
SOC DE SEMOIR

(30) Priorität: 18.12.2012 DE 102012112567
(43) Veröffentlichungstag der Anmeldung: 16.09.2015
(73) Patentinhaber: Kverneland AS, 4355 Kvernaland (NO)
(72) Erfinder: SCHUMACHER, Ferdinand, 59510 Lippetal-Oestinghausen (DE); SCHANZENBACH, Volker, 49170 Hagen a. T. W. (DE); WINKELMANN, Michael, 59494 Soest (DE)
(74) Vertreter: Schneider, Sascha
(86) Internationale Anmeldenummer: PCT/EP2013/069697
(87) Internationale Veröffentlichungsnummer: WO 2014/095106

(56) Entgegenhaltungen:
- EP-A1- 0 266 527
- GB-A- 2 056 238
- US-A- 5 524 560
- US-A1- 2012 048 160

## Beschreibung

Die vorliegende Erfindung betrifft ein Säschar gemäß Patentanspruch 1 sowie ein Sägerät gemäß Patentanspruch 8.

Solche Sägeräte mit entlang der Säbreite gleichmäßig verteilten Säscharen zur Einbringung von landwirtschaftlichen Betriebsmitteln, insbesondere Saatgut und/oder Dünger, in einen Ackerboden sollen eine gleichmäßige Sätiefe/Eindringtiefe sowie nach Einbringung des Saatguts/Düngers ein für jeweilige Saatbedingungen optimales Andrücken/Verschließen der Säfurche gewährleisten. Hierbei spielt nicht nur das Saatgut/der Dünger eine wesentliche Rolle, sondern auch die Bodenbeschaffenheit, wie beispielsweise die Feuchtigkeit des Bodens und vor allen Dingen im oder auf dem Boden vorhandene Hindernisse wie Steine.

Die Druckschrift US 2012/048160 A1 beschreibt ein Säschar mit einer Scharscheibe zur Einbringung von landwirtschaftlichen Betriebsmitteln in einen Boden entlang einer Fahrtrichtung.

Aufgabe der vorliegenden Erfindung ist es daher, ein Säschar beziehungsweise ein Sägerät anzugeben, das einerseits konstruktiv einfach ist und andererseits für eine optimale Einbringung des Saatguts und/oder Düngers in den Boden sorgt.

Diese Aufgabe wird mit den Merkmalen der Patentansprüche 1 und 8 erfüllt. Vorteilhafte Weiterbildungen der Erfindung sind in den Unteransprüchen angegeben.

Der Erfindung liegt der Gedanke zugrunde, durch Vorsehen einer Höhenmesseinrichtung zur Messung der Höhe der Scharscheibe relativ zum Boden eine Steuerung/Regelung der Eindringtiefe zu ermöglichen. Dabei kann erfindungsgemäß auf eine Andruckrolle beziehungsweise Tiefenführungsrolle oder -rad verzichtet werden, die bisher für die Festsetzung der Eindringtiefe mit verantwortlich war. Daraus ergibt sich nicht nur eine Gewichts- und Kostenreduzierung des Säschars, sondern auch eine bauliche Verbesserung. Denn die Breite der Andruckrollen hat bisher den minimalen Abstand zwischen benachbarten Säscharen begrenzt. Dieser kann ohne Andruckrolle deutlich verringert werden, so dass mehr Saatgut pro Säbreite des Sägeräts in den Boden eingebracht werden kann. Erfindungsgemäß erfolgt insbesondere eine aktive Kraftbeaufschlagung der Scharscheibe durch den Scharhalter abhängig von einer Steuerung/Regelung, insbesondere mittels der gemessenen Eindringtiefe als Stellgröße. Dabei kann insbesondere ein Korridor oder eine maximale und/oder minimale Eindringtiefe, insbesondere abhängig von der Bodenbeschaffenheit und/oder der Art des Saatguts/Düngers vorgegeben werden. Die minimale Eindringtiefe liegt insbesondere bei mindestens 1 cm, die maximale Eindringtiefe insbesondere bei maximal 15cm, vorzugsweise maximal 10cm, noch bevorzugter maximal 6cm. Die Eindringtiefe oder der Eindringtiefenkorridor wird insbesondere abhängig von dem auszubringenden landwirtschaftlichen Betriebsmittel gewählt.

Erfindunsgemäss ist es mit Vorteil vorgesehen, dass der Scharhalter einen Parallelogrammarm mit einem Hubzylinder zur Höhenverstellung aufweist. Der Parallelogrammarm ist insbesondere aus zwei parallel zueinander und schwenkbar ausgebildeten Armen gebildet. Die Arme sind an einem Ende an einem Fixierprofil zur Anbringung des Scharhalters am Scharrahmen und an dem gegenüberliegenden Ende der Arme an einem Schalelement zur Aufnahme der Scharscheibe schwenkbar angebracht. Der Hubzylinder kann erfindungsgemäß hydraulisch, bevorzugt aber elektrisch oder pneumatisch betätigt sein.

Die Erfindung sieht vor, dass die Höhenmessung mittels der Höhenmesseinrichtung durch mechanischen Kontakt mit dem Boden, insbesondere mittels eines, vorzugsweise an einer Kontaktfläche konvex in Richtung des Bodens gekrümmten, Messarms, erfolgt. Durch mechanischen Kontakt mit dem Boden ist eine exakte Messung auch über eine lange Laufzeit selbst bei starker Schmutzbelastung im Bereich des Säschars möglich. Insbesondere ist der Messarm der Höhenmesseinrichtung mit einer Kraft in Richtung des Bodens beaufschlagt, vorzugsweise einer Federkraft.

Die Höhenmesseinrichtung wird durch einen Messarm weitergebildet, der an einer Schwenkachse des Scharhalters schwenkbar angelenkt ist. Insbesondere kann der Messarm von seiner Schwenkachse aus gesehen bis zu seinem gegenüberliegenden, insbesondere freien, Ende sich verjüngend ausgebildet sein. Insbesondere weist der Messarm eine Sichelform auf.

Dabei ist es gemäß einer vorteilhaften Ausführungsform vorgesehen, dass der Messarm sich zumindest bis zu einer Eindringtiefe der Scharscheibe gleich Null erstreckt. Somit ist selbst bei Überfahren eines harten Hindernisses, wie beispielsweise eines Steines, sichergestellt, dass eine Messung der Eindringtiefe auch nach Überfahren des Hindernisses weiter erfindungsgemäß erfolgt.

Soweit die Höhenmesseinrichtung ein zwischen dem Messarm und dem Scharelement verlaufendes Längenmesselement aufweist, lässt sich die Eindringtiefe auf einfache Art und Weise ermitteln, insbesondere durch Vektorrechnung der in Bezug stehenden beweglichen Achsen. Alternativ kann das Längenmesselement durch einen elektronischen Abstandssensor ersetzt werden.

Gemäß einer weiteren, vorteilhaften Ausführungsform der Erfindung ist vorgesehen, dass am Säschars, insbesondere in Fahrtrichtung vor der Scharscheibe, ein Feuchtesensor zur Messung der Feuchtigkeit des Bodens angebracht ist. Auf diese Weise kann insbesondere ein Korridor oder die maximale und/oder minimale Eindringtiefe für die Scharscheibe festgelegt werden.

Soweit die Eindringtiefe abhängig von der Feuchtigkeit des Bodens steuerbar/regelbar ist, kann ein optimales Keimverhalten oder Auflaufverhalten durch eine jeweils, insbesondere für jede Spur separat, festgelegte Ablagetiefe des Saatguts erfindungsgemäß gewährleistet werden.

Erfindungsgemäß ist ein Sägerät mit einem Scharrahmen und mehreren, am Scharrahmen angebrachten, erfindungsgemäß offenbarten Säscharen vorgesehen. Zu den Säscharen offenbarte Merkmale sollen auch für das Sägerät als offenbart gelten. Insbesondere ist erfindungsgemäß ein Sägerät mit mehreren Säscharen oder in mehreren Gruppen von Säscharen zusamrnengefassten erfindungsgemäß unabhängig voneinander hinsichtlich der Eindringtiefe steuerbaren/regelbaren Säscharen vorgesehen.

Eine erfindungsgemäße Ausführungsform besteht darin, dass die maximale Eindringtiefe oder der Korridor für die Eindringtiefe abhängig von der Bodenart und/oder Bodenbeschaffenheit festgelegt wird, insbesondere durch GPS-Bestimmung automatisiert anpassbar.

Erfindungsgemäß ist die Sätiefe beziehungsweise Eindringtiefe zentral und/oder werkzeuglos einstellbar. Bodenunterschiede durch z.B. Fahrspuren beeinflussen die Eindringtiefe nicht oder allenfalls unwesentlich.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine Seitenansicht eines erfindungsgemäßen Säschars in einer ersten Säposition der Scharscheibe und
- Figur 2: eine Seitenansicht des Säschars gemäß Figur 1 in einer zweiten Säposition der Scharscheibe.

In den Figuren sind gleiche oder gleichwirkende Elemente mit den gleichen Bezugszeichen gekennzeichnet.

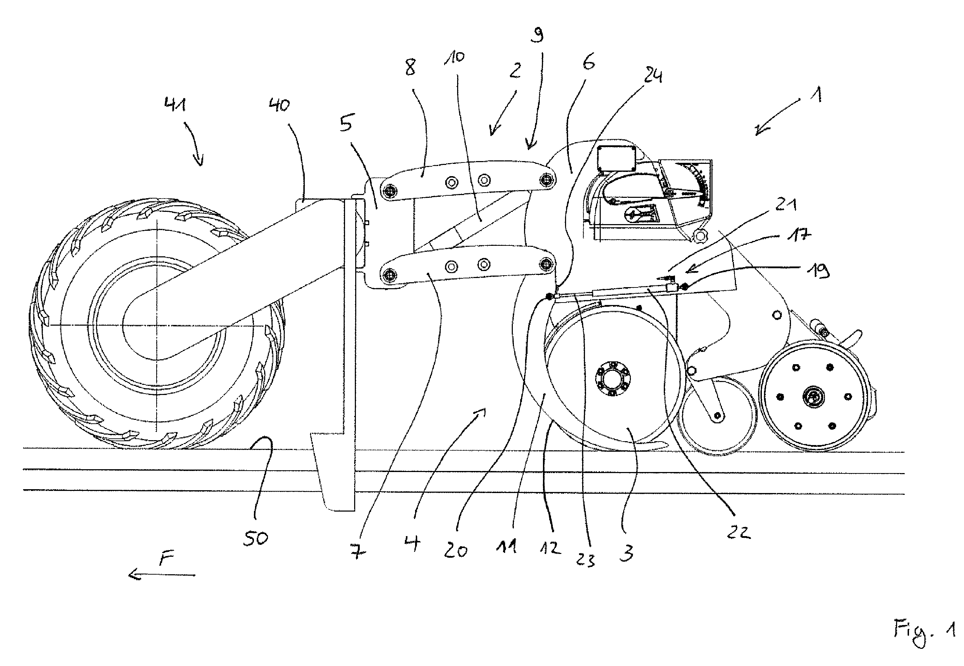

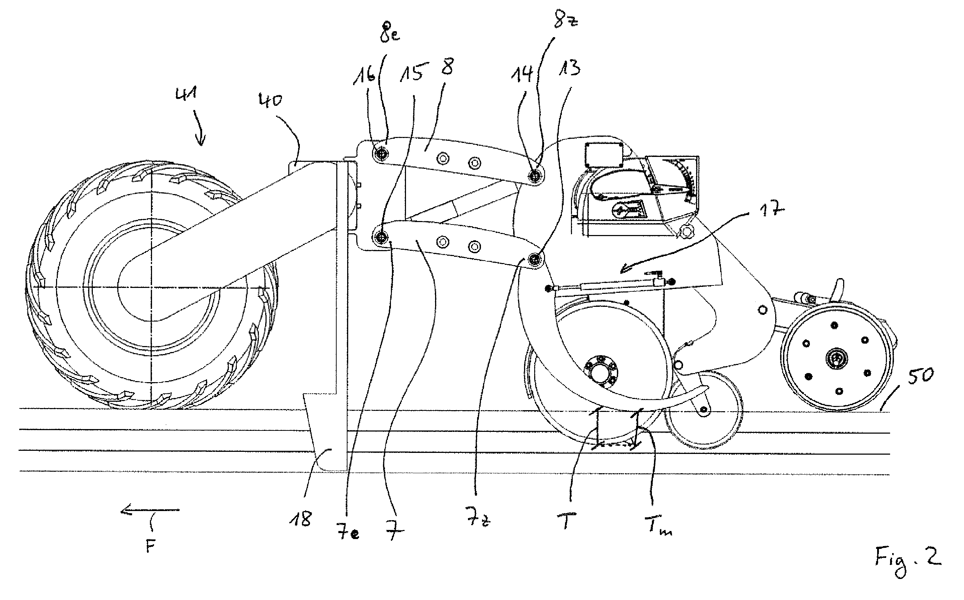

Figur 1 und Figur 2 zeigen ein an einem Scharrahmen 40 angebrachtes Säschar 1. Die Anbringung erfolgt durch ein an dem Scharrahmen 40 ohne Freiheitsgrade fixierbares Fixierprofil 5, wobei entlang des Scharrahmens 40 (also in die Zeichnungsebene hinein) mehrere Säschare 1 nebeneinander angeordnet sind. Der Einfachheit halber ist nur ein einziges Säschar 1 dargestellt.

An dem Fixierprofil 5 ist in zwei übereinander angeordneten Schwenkachsen 15, 16 jeweils ein Arm 7, 8 angelenkt, und zwar jeweils an einem ersten Ende 7e, 8e der Arme 7, 8. Am jeweils gegenüberliegenden zweiten Ende 7z, 8z der Arme 7, 8 ist in zwei Schwenkachsen 13, 14 ein Scharelement 6 angelenkt. Die Arme 7, 8 verlaufen dabei parallel zueinander. Zwischen je einer schräg gegenüberliegenden Schwenkachse 13, 14, 15, 16 verläuft ein Hubzylinder 10, im gezeigten Ausführungsbeispiel zwischen den Schwenkachsen 14 und 15, denkbar wäre auch die Anordnung des Hubzylinders 10 zwischen den Schwenkachsen 13 und 16. Das Fixierprofil 5, die Arme 7,8 und das Scharelement 6 sowie der Hubzylinder 10 bilden gemeinsam einen Scharhalter 2 zur schwenkbaren Halterung einer Scharscheibe 3. Die Scharscheibe 3 ist an dem Scharhalter 2, insbesondere an dem Scharelement 6, angebracht, und zwar vorzugsweise ohne Freiheitsgrad, außer gegebenenfalls einer Rotation um die eigene Achse.

Durch die Anbringung der Scharscheibe 3 an einem mit Parallelogrammarm 9 ausgestatteten Scharhalter 2 kann die Scharscheibe 3 mittels des Scharhalters in ihrer Höhe gegenüber dem Scharrahmen 40 verstellt werden, wobei die Ausrichtung der Scharscheibe 3 gegenüber dem Scharelement 6 relativ zum Boden 50 annähernd konstant bleibt, und zwar auf Grund der Parallelverschiebung der Schwenkachsen 13, 14 zu den Schwenkachsen 15, 16.

Auf Grund des erfindungsgemäßen Verzichts auf eine Andruckrolle wird zur Einstellung einer Eindringtiefe T der Scharscheibe 3 in den Boden 50 erfindungsgemäß eine Höhenmesseinrichtung 4 an dem Säschar 1 vorgesehen.

Die Höhenmesseinrichtung 4 besteht aus einem Messarm 11 mit einer den Boden 50 kontaktierenden Kontaktfläche 12, die in Richtung des Bodens und zur Fahrtrichtung hin konvex gekrümmt ist, um dem Boden 50 beziehungsweise etwaigen Bodenunebenheiten, also der Bodenoberfläche, auch bei unterschiedlichen Eindringtiefen gemäß Figur 1 oder Figur 2 zu folgen. Der Messarm 11 ist an der Schwenkachse 13 schwenkbar angebracht und somit in Bezug gesetzt zu der an dem Scharelement 6 angebrachten Scharscheibe 3. Die Schwenkachse 13 ist dabei insbesondere in Fahrtrichtung F vor einer Rotationsachse der Scharscheibe 3 angeordnet. Alternativ könnte eine Schwenkachse des Messarms 11 auch hinterhalb der Rotationsachse der Scharscheibe 3 angeordnet sein.

Bei einer Änderung der Höhe des Scharelements 6 und somit der Scharscheibe 3 gegenüber dem Boden 50 schwenkt der Messarm 11 somit um die Schwenkachse 13. Diese Schwenkbewegung wird durch ein Längenmesselement 17 gemessen und aus dem gemessenen Wert der Längenänderung des Längenmesselements 17 kann die Änderung der Eindringtiefe und nach entsprechender Kalibrierung die Eindringtiefe Tₘ ermittelt werden. Der ermittelte Wert der gemessenen Eindringtiefe Tₘ wird dann als Sollgröße für einen entsprechenden Regelkreis zur Steuerung der Höhenverstellung der Scharscheibe 3 verwendet werden.

Das Längenmesselement 17 misst den Abstand zwischen einem ersten Fixpunkt 19 am Scharelement 6 und einem zweiten Fixpunkt 20 am Messarm 11. Hierzu weist das Längenmesselement 17 vorzugsweise einen am ersten Fixpunkt 19 schwenkbar angebrachten Hohlzylinder 22 auf, an dem im Bereich des ersten Fixpunktes 19 eine Entfernungsmesseinrichtung 21 angebracht ist. In dem Hohlzylinder 22 ist eine Stange 23 gleitend geführt, die im Bereich des zweiten Fixpunktes 20 an dem Messarm 11 schwenkbar fixiert ist. An der Stange ist ein Messelement 24 angebracht, dessen Entfernung von der Entfernungsmesseinrichtung 21 gemessen wird. Durch die Schwenkbewegung des Messarms 11 ändert sich die Entfernung des ersten Fixpunkts 19 zum zweiten Fixpunkt 20 und durch die von der Entfernungsmesseinrichtung 21 ermittelten Werte kann die Änderung der Eindringtiefe T gemessen werden und als gemessene Eindringtiefe Tₘ an eine entsprechende Steuerungs-/Regelungseinrichtung zur Steuerung/Regelung der Höhenverstellung zur Verfügung gestellt werden.

Weiterhin weist das Säschar oder das Sägerät einen Feuchtesensor 18 auf, der im gezeigten Ausführungsbeispiel an dem Scharrahmen 40 angebracht ist. Der Feuchtesensor ist in Fahrtrichtung F vor der Scharscheibe 3 angeordnet, um genügend Zeit für eine Verstellung der Eindringtiefe T nach Messung der Feuchtigkeit zu haben. Insbesondere wird der Wert der Feuchtigkeit verwendet, um einen Korridor, insbesondere zwischen 3 cm und 6 cm Eindringtiefe T, festzulegen, innerhalb dessen die Eindringtiefe gesteuert/geregelt wird.

Gemäß einer alternativen, bevorzugten Ausführungsform ist der Feuchtesensor in Fahrtrichtung hinter der Scharscheibe 3 angeordnet, da der Feuchtesensor in dieser Ausführungsform durch die Scharscheibe 3 vor Beschädigungen geschützt wird und eine Messung in der eingestellten Tiefe erfolgt, ohne dass der Feuchtesensor nennenswert in den Boden eindringen müsste.

### Säschar

### Bezugszeichenliste

- 1: Säschar
- 2: Scharhalter
- 3: Scharscheibe
- 4: Höhenmesseinrichtung
- 5: Fixierprofil
- 6: Scharelement
- 7: Arm
- 7e: erstes Ende
- 7z: zweites Ende
- 8: Arm
- 8e: erstes Ende
- 8z: zweites Ende
- 9: Parallelogrammarm
- 10: Hubzylinder
- 11: Messarm
- 12: Kontaktfläche
- 13: Schwenkachse
- 14: Schwenkachse
- 15: Schwenkachse
- 16: Schwenkachse
- 17: Längenmesselement
- 18: Feuchtesensor
- 19: erster Fixpunkt
- 20: zweiter Fixpunkt
- 21: Entfernungsmesseinrichtung
- 22: Hohlzylinder
- 23: Stange
- 24: Messelement
- 40: Scharrahmen
- 41: Fahrwerk
- 50: Boden
- F: Fahrtrichtung
- T: Eindringtiefe
- Tₘ: gemessene Eindringtiefe

## Patentansprüche

1. Säschar mit
- einer Scharscheibe (3) zur Einbringung von landwirtschaftlichen Betriebsmitteln in einen Boden (50) entlang einer Fahrtrichtung F,
- einer im Bereich der Scharscheibe (3) angeordneten Höhenmesseinrichtung (4) zur Messung einer Eindringtiefe Tₘ der Scharscheibe (3) in den Boden (50),
- einem Scharhalter (2) zur schwenkbaren Halterung der Scharscheibe (3) an einem Scharrahmen (40) und Höhenverstellung gegenüber dem Scharrahmen (40), wobei die Eindringtiefe T der Scharscheibe (3) abhängig von der gemessenen Eindringtiefe Tm steuerbar/regelbar ist, wobei der Scharhalter (2) einen Parallelogrammarm (9) mit einem Hubzylinder (10) zur Höhenverstellung aufweist, **dadurch gekennzeichnet, dass** die Höhenmessung mittels der Höhenmesseinrichtung (4) durch mechanischen Kontakt mit dem Boden (50) mittels eines Messarms (11) erfolgt und dass der Messarm (11) an einer Schwenkachse (13) des Scharhalters (2) schwenkbar angelenkt ist.

2. Säschar nach Anspruch 1, bei dem der Parallelogrammarm (9) zwei parallel zueinander und jeweils einen Endes an einem Fixierprofil (5) zur Anbringung des Scharhalters (2) am Scharrahmen (40) und anderen Endes an einem Scharelement (6) zur Aufnahme der Scharscheibe (3) schwenkbar angebrachte Arme (7, 8) aufweist.

3. Säschar nach einem der vorhergehenden Ansprüche, bei dem die Höhenmessung mittels der Höhenmesseinrichtung (4) durch mechanischen Kontakt mit dem Boden (50), insbesondere mittels eines, vorzugsweise an seiner Kontaktfläche (12) konvex in Richtung des Bodens (50) gekrümmten Messarms (11), erfolgt.

4. Säschar nach Anspruch 1, bei dem der Messarm (11) sich zumindest bis zu einer Eindringtiefe (T) der Scharscheibe (3) gleich Null erstreckt.

5. Säschar nach den Anspruch 2, bei dem die Höhenmesseinrichtung (4) ein zwischen dem Messarm (11) und dem Scharelement (6) verlaufendes Längenmesselement (17) aufweist.

6. Säschar nach einem der vorhergehenden Ansprüche, bei dem am Säschar (1), insbesondere in Fahrtrichtung (F) vor der Scharscheibe (3), ein Feuchtesensor (18) zur Messung der Feuchtigkeit des Bodens (50) angebracht ist.

7. Säschar nach Anspruch 6, bei dem die Eindringtiefe (T) abhängig von der Feuchtigkeit des Bodens (50) steuerbar/regelbar ist.

8. Sägerät mit einem Scharrahmen (40) zur Aufnahme von mindestens einem Säschar (1) nach einem der vorhergehenden Ansprüche.

## Claims

1. A coulter with
- a coulter disc (3) for delivering agricultural materials into soil (50) along one direction F of travel,
- a height measuring apparatus (4) which is located in the region of the coulter disc (3) for measuring a penetration depth Tₘ of the coulter disc (3) into the soil (50).
- a coulter holder (2) for swivelling holding of the coulter disc (3) on a coulter frame (40) and height setting relative to the coulter frame (40), the penetration depth T of the coulter disc (3) being controllable/adjustable depending on the measured penetration depth Tₘ, wherein the coulter holder (2) has one parallelogram arm (9) with a lifting cylinder (10) for adjusting the height, **characterized in that** the height is measured by means of the height measuring apparatus (4) by mechanical contact with the soil (50) by means of a measurement arm (11) and **in that** the measurement arm (11) is swivelling coupled to one swivelling axis (13) of the coulter holder (2).

2. The coulter as claimed in Claim 1, the parallelogram arm (9) having in particular two arms (7, 8) which are made parallel to one another and each pivotally attached on one end to a fixing profile (5) for attaching the coulter holder (2) to the coulter frame (40) and on the other end to a coulter element (6) for accommodating the coulter disc (3).

3. The coulter according to one of the preceeding claims, wherein the height is measured by the height measuring apparatus (4) by mechanical contact with the soil by means of a measurement arm (11), wherein especially the measuring arm (11) is convexly curved, preferably in the direction of the soil (50) on one contact surface (12).

4. The coulter as claimed in claim 1, wherein the measurement arm (11) extends at least up to a penetration depth T of the coulter disk (3) equal to zero.

5. The coulter as claimed in Claims 2, wherein the height measuring apparatus (4) has a length measuring element (17) which runs between the measurement arm (11) and the coulter element (6).

6. The coulter according to one of the preceeding claims, wherein on the coulter (1), in particular in the direction F of travel in front of the coulter disc (3), a moisture sensor (18) for measuring the moisture content of the soil (50) is attached.

7. The coulter as claimed in Claim 6, wherein the penetration depth T can be controlled/adjusted depending on the moisture content of the soil (50).

8. A sowing device with a coulter frame (40) for accommodating at least one coulter (1) as claimed in one of the preceding claims.

## Revendications

1. Soc de semoir avec
- un disque de soc (3) pour introduire des moyens d'exploitation agricoles dans un sol (50) le long d'une direction de conduite F,
- un dispositif de mesure de hauteur (4) disposé dans le secteur du disque de soc (3), destiné à la mesure d'une profondeur de pénétration Tₘ du disque de soc (3) dans le sol (50),
- un support de soc (2) destiné à la fixation pivotable du disque de soc (3) sur un cadre de soc (40) et au réglage en hauteur par rapport au cadre de soc (40), la profondeur de pénétration T du disque de soc (3) pouvant être commandée/réglée en fonction de la profondeur de pénétration Tₘ mesurée, le support de soc (2) comportant un bras en parallélogramme (9) avec un vérin de levage (10) pour le réglage de la hauteur, **caractérisé en ce que** la mesure de la hauteur a lieu au moyen du dispositif de mesure de hauteur (4) par contact mécanique avec le sol (50) au moyen d'un bras de mesure (11) et **en ce que** le bras de mesure (11) est articulé de manière à pouvoir pivoter sur un axe de pivotement (13) du support de soc (2).

2. Soc de semoir selon la revendication 1, pour lequel le bras en parallélogramme (9) comporte deux bras (7, 8) montrés pivotable parallèlement l'un à l'autre et respectivement à une extrémité sur un profilé de fixation (5) pour monter le support de soc (2) sur le cadre de soc (40) et à une autre extrémité sur un élément de soc (6) pour loger le disque de soc (3).

3. Soc de semoir selon l'une quelconque des revendications précédentes, pour lequel la mesure de hauteur a lieu au moyen du dispositif de mesure de hauteur (4) par contact mécanique avec le sol (50), en particulier au moyen d'un bras de mesure (11) courbe, de préférence sur sa surface de contact (12), convexe en direction du sol (50).

4. Soc de semoir selon la revendication 1, pour lequel le bras de mesure (11) s'étend au moins jusqu'à une profondeur de pénétration (T) du disque de soc (3) égale à zéro.

5. Soc de semoir selon la revendication 2, pour lequel le dispositif de mesure de hauteur (4) comporte un élément de mesure de longueur (17) passant entre le bras de mesure (11) et l'élément de soc (6).

6. Soc de semoir selon l'une quelconque des revendications précédentes, pour lequel un capteur d'humidité (18) destiné à mesurer l'humidité du sol (50) est monté sur le soc de semoir (1), en particulier dans la direction de conduite (F) avant le disque de soc (3).

7. Soc de semoir selon la revendication 6, pour lequel la profondeur de pénétration (T) peut être commandée/réglée en fonction de l'humidité du sol (50).

8. Semoir avec un cadre de soc (40) pour loger au moins un soc de semoir (1) selon l'une quelconque des revendications précédentes.
